# FASCICULE DE BREVET EUROPEEN

(11) **EP 3 475 847 B1**
(45) Date de publication et mention de la délivrance du brevet: **18.08.2021**
(21) Numéro de dépôt: 17740443.1
(22) Date de dépôt: 22.06.2017
(51) Int. Cl.: G06F 16/00

(54) **SERVEUR DE STATISTIQUES POUR OPTIMISATION DE REQUÊTES CLIENT-SERVEUR**
STATISTIKSERVER ZUR OPTIMIERUNG VON CLIENT-SERVER-ANFRAGEN
STATISTICS SERVER FOR OPTIMISING CLIENT-SERVER QUERIES

(30) Priorité: 27.06.2016 FR 1655947
(43) Date de publication de la demande: 01.05.2019
(73) Titulaire: ORANGE, 92130 Issy-les-Moulineaux (FR)
(72) Inventeur: CARBOU, Romain, 91800 Brunoy (FR); OP, Thomas, 94110 Arcueil (FR); ROZE, Stephen, 92130 Issy Les Moulineaux (FR)
(86) Numéro de dépôt international: PCT/FR2017/051667
(87) Numéro de publication internationale: WO 2018/002483

(56) Documents cités:
- WO-A1-2015/041711
- US-A1- 2012 291 045
- US-A1- 2015 156 280

## Description

### Domaine technique

L'invention se rapporte aux applications logicielles dans le contexte d'applications client-serveur.

L'invention s'applique en particulier à l'optimisation des requêtes entre un client et son serveur.

### Etat de la technique

Les applications bâties sur le modèle client-serveur permettent à l'utilisateur d'un terminal, dit terminal client, l'accès à des ressources sur un serveur situé à distance dans un réseau de communications. Une application, dite application serveur, propose un ensemble de services aux applications des terminaux clients, dites applications clientes.

Dans le contexte d'une application s'exécutant sur un terminal mobile, de telles applications peuvent être par exemple des applications d'accès à un compte personnel de données mobiles, bancaires, médicales, à un service de météo, etc. Si l'on prend l'exemple d'une application bancaire, ces services peuvent concerner la mise à disposition des informations relatives à un compte courant ou un compte d'épargne de l'utilisateur, la gestion des virements bancaires, l'accès aux coordonnées bancaires de l'utilisateur, l'accès aux coordonnées de la banque, l'accès à un simulateur bancaire, etc.

Pour bénéficier de ces services, l'utilisateur navigue généralement sur différentes pages de l'application cliente, chaque page étant susceptible d'émettre une ou plusieurs requêtes vers un ou plusieurs services de l'application serveur. Cette navigation est aussi appelée « parcours client ». Le serveur répond aux requêtes par une réponse comportant des données qui permettent l'affichage d'un résultat sur le terminal client. Ces données peuvent être des données d'interface pour affichage et/ou des données propres à l'application (par exemple, le montant du compte courant, les dernières opérations effectuées sur le compte, etc.)

Ces requêtes peuvent être émises vers le serveur selon différents modes : l'application cliente peut émettre la requête de manière anticipée, en exigeant une réponse immédiate du serveur, ou au contraire émettre une requête seulement au moment de la demande d'affichage, sans garantie sur le moment de réception de la réponse. Le mode de requête choisi résulte généralement d'un compromis entre la fluidité d'affichage garantie à l'utilisateur, la nature des données manipulées et le dimensionnement du serveur (c'est-à-dire le nombre de requêtes qu'il peut recevoir et traiter simultanément). Aujourd'hui, la plupart des applications gèrent leurs modes de requêtes de manière statique : une partie des requêtes est anticipée au démarrage de l'application, les autres étant émises lorsque l'utilisateur navigue sur les différentes pages, ou vues, de l'application.

Or, un certain mode peut être souhaitable pour la requête en fonction de son importance relative par rapport aux autres : certaines requêtes sont plus fréquentes que d'autres, nécessitent une réponse plus rapide, etc. Par exemple, dans le cadre de l'application bancaire évoquée plus haut, il est probable que l'utilisateur demande plus souvent les données relatives à son compte courant qu'une simulation d'emprunt bancaire. Selon un autre exemple, à certaines périodes, comme la fin du mois, les utilisateurs peuvent être plus concernés par la page « opérations à venir » pour vérifier la programmation du virement de leur salaire. Le document WO 2015/041711 A1 (YOTTAA INC [US]; WEI COACH K [US]; BUFFONE ROBERT [US]) 26 mars 2015 (2015-03-26) décrit des procédés et des systèmes pour distribuer un élément de contenu Internet demandé par un client.

De plus, le mode de requête le plus adapté peut fréquemment changer au cours de la vie d'une application : les parcours clients au sein de l'application évoluent, une partie de l'application peut gagner ou perdre en importance relative, etc.

La prise en compte de ces changements implique d'importants coûts de maintenance applicative car une modification des modes de requêtes vers les différents services suppose une mise à jour de l'application par les développeurs, puis un rechargement de l'application sur le terminal de l'utilisateur, etc.

L'invention offre une solution ne présentant pas les inconvénients de l'état de la technique.

### L'invention

A cet effet, selon un aspect fonctionnel, l'invention a pour objet un procédé d'exécution d'une application cliente tel que décrit par la revendication 1.

Le terme " vue " désigne la présentation de données correspondant à zéro, une ou plusieurs ressources mises à disposition par le serveur et pouvant être affichées sur l'écran du terminal client. On parlera aussi de « page » dans le contexte d'une application Web.

Le terme " terminal client " désigne d'une manière générale tout dispositif informatique apte à envoyer des requêtes à un serveur pour que ce dernier lui envoie en retour les données qui sont objet de la requête, par exemple, dans le contexte d'une application Web, une page identifiée dans la requête par son adresse sur le serveur.

Le terme " réseau de télécommunication " désigne d'une manière générale tout moyen de communication permettant l'échange de données à distance entre un serveur et un terminal client ; il peut s'agir d'un réseau local (LAN) tel que l'intranet d'une entreprise ou encore d'un réseau longue distance (WAN) tel que par exemple le réseau Internet, ou encore d'un ensemble de réseaux de types différents et interconnectés.

Le terme " attribut " de paramétrage de la requête désigne une donnée relative à une vue de l'application, qui est aussi une caractéristique de la requête qui sera émise vers le serveur.

Le terme " structure de données relatives aux vues de l'application " désigne une structure de données qui permet de définir un parcours dans les vues de l'application (« parcours client »), avec un certain nombre d'attributs associés à chaque vue et/ou aux services qui lui sont associés. Dans la suite, on parle de graphe, mais on pourrait aussi envisager cette structure sous forme de listes, de tableaux, etc. Le passage, ou navigation, d'une vue à l'autre est déterminé par un lien.

Avantageusement selon l'invention, les données relatives aux vues de l'application conditionnent les requêtes vers le serveur, puisque la requête est paramétrée en fonction d'un attribut obtenu via cette structure de données. Notamment, le moment d'émission de la requête et le mode de récupération des données reçues en réponse peuvent être ainsi paramétrés. Cette structure détermine donc le comportement de l'application cliente. Elle est cependant indépendante de l'application cliente et peut être mémorisée à part. Il est ainsi possible de modifier les caractéristiques des requêtes au serveur, sans changer l'application elle-même. En d'autres termes, l'invention sépare les données relatives aux vues de l'application, de l'application elle-même. Elle offre donc l'avantage de ne pas nécessiter de reprogrammation de l'application lorsqu'une caractéristique attachée à une requête doit être modifiée. Ceci évite la reprogrammation et la mise à disposition (par exemple sur un *store*) de l'application, donc entraîne un gain en termes de développement. Ceci implique aussi des avantages pour l'utilisateur : il éprouve plus de fluidité dans la navigation si les requêtes sont adaptées à son comportement, et il doit remettre à jour les applications moins souvent sur son terminal. Enfin, au niveau du terminal, une gestion intelligente des requêtes émises par l'application peut permettre d'optimiser les ressources. L'invention améliore donc la maintenance applicative au sens large, incluant notamment l'optimisation, la gestion des ressources de l'application cliente et/ou du terminal client, le confort de l'utilisateur du terminal, etc.

Selon un mode de mise en œuvre particulier de l'invention, dans un procédé tel que décrit ci-dessus, une vue est liée à au moins une autre vue par un lien de navigation dans la structure de données, et le procédé est en outre caractérisé en ce qu'il comporte les étapes suivantes :
- obtention, dans la structure de données relatives aux vues de l'application, d'au moins un second attribut pour au moins une seconde vue distincte de la vue courante et liée à la vue courante par au moins un lien de navigation ;
- génération d'une requête vers le serveur en fonction du second attribut obtenu.

Avantageusement, ce mode de mise en œuvre de l'invention permet de générer vers le serveur des requêtes associées à une vue qui n'est pas nécessairement la vue courante : si une autre vue de la structure de données nécessite un mode de requête particulier, par exemple de manière anticipée, l'obtention de cet attribut permet de générer la requête alors même que l'utilisateur n'a pas encore accédé à la vue (navigué sur la vue). Ceci permettra notamment de mettre en cache des données importantes en attendant la navigation effective de l'utilisateur sur cette vue (page).

Ce mode de mise en œuvre de l'invention permet notamment de générer vers le serveur des requêtes associées à une vue « parente » de la vue courante, c'est-à-dire liée à la vue courante par un lien direct : l'obtention de cet attribut permet de générer la requête alors même que l'utilisateur n'a pas encore accédé à la vue mais qu'il s'en approche en navigant dans l'application. Ceci permettra notamment de mettre en cache des données importantes de la page suivante de la page courante, qui a de fortes probabilités d'être consultée après la page courante.

Ce mode de mise en œuvre de l'invention permet aussi de générer vers le serveur des requêtes associées à une vue qui est liée à la vue courante par un ensemble de liens, c'est-à-dire un « chemin « de navigation dans la structure de données liées aux vues : l'obtention de cet attribut permet de générer la requête alors même que la vue liée est assez éloignée de la vue courante (au sens de la navigation) mais présente un intérêt ou une importance particuliers. Ceci permettra notamment de mettre en cache des données importantes d'une page quelconque de l'application.

Selon un second mode de mise en œuvre particulier de l'invention, qui pourra être mis en œuvre alternativement ou cumulativement avec le précédent, un procédé tel que décrit ci-dessus est en outre caractérisé en ce que la structure de données relatives aux vues de l'application est obtenue du serveur.

Avantageusement selon ce mode de réalisation, les données relatives aux vues de l'application sont obtenues par le terminal client en provenance du serveur. En d'autres termes, l'application cliente reçoit du serveur, en cours de session ou en dehors d'une session, la façon dont chaque type de requête sera effectué au cours de la navigation sur l'application cliente. Ceci est avantageux car le serveur connaît non seulement les statistiques d'usage pour le terminal sur lequel s'exécute le procédé, mais aussi sur les autres terminaux. Il peut donc générer une structure de données particulièrement pertinente.

Selon une variante de ce second mode de mise en œuvre particulier de l'invention, un procédé tel que décrit ci-dessus est en outre caractérisé en ce que la structure de données relatives aux vues de l'application est obtenue en réponse à une requête de connexion de l'application cliente à l'application serveur.

Avantageusement selon cette variante, les données relatives aux vues de l'application sont obtenues par le terminal client à chaque début de session de communication entre le client et le serveur. Le terminal client peut ainsi analyser la structure de données reçue dès le début de l'échange client-serveur.

Selon un troisième mode de mise en œuvre particulier de l'invention, qui pourra être mis en œuvre alternativement ou cumulativement avec les précédents, un procédé tel que décrit ci-dessus est en outre caractérisé en ce qu'un attribut de paramétrage de la requête associé à la vue est un attribut de politique de requête.

Avantageusement selon ce mode de réalisation, l'attribut associé à la vue est un attribut de politique de la requête, c'est-à-dire un attribut qui conditionne l'instant d'émission de la requête par rapport à l'instant de navigation sur la vue, ainsi que l'instant de réception des données.

Selon un quatrième mode de mise en œuvre particulier de l'invention, qui pourra être mis en œuvre alternativement ou cumulativement avec les précédents, un procédé tel que décrit ci-dessus est en outre caractérisé en ce qu'un attribut de paramétrage de la requête associé à la vue est un attribut de priorité.

Avantageusement selon ce mode de réalisation, l'attribut associé à la vue est un attribut de priorité associée à la vue (ou à un service de la vue), c'est-à-dire un attribut qui conditionne l'importance de la vue (ou d'un service de la vue) par rapport aux autres, et permet donc d'émettre une requête vers le serveur en prenant en compte cette priorité : une vue plus prioritaire pourra par exemple servir de base à une requête paramétrée de manière à obtenir les données du serveur plus rapidement qu'une vue moins prioritaire.

Selon un cinquième mode de mise en œuvre particulier de l'invention, qui pourra être mis en œuvre alternativement ou cumulativement avec les précédents, dans un procédé tel que décrit ci-dessus, au moins un service du serveur est associé à une vue dans la structure de données, et le procédé est en outre caractérisé en ce qu'un attribut de paramétrage de la requête est associé audit service.

Avantageusement selon ce mode de réalisation, l'attribut est associé, non pas à la vue globale, mais plus spécifiquement à un service dépendant d'une vue (ou associé à une vue). De cette manière, une même vue peut requérir des services avec des requêtes de types différents, en fonction par exemple de l'importance relative du service dans la vue, ou des données qu'il manipule, etc.

Selon un sixième mode de mise en œuvre particulier de l'invention, qui pourra être mis en œuvre alternativement ou cumulativement avec les précédents, un procédé tel que décrit ci-dessus est en outre caractérisé en ce que la structure de données relatives aux vues de l'application comprend un graphe orienté.

Avantageusement selon ce mode de réalisation, le graphe orienté permet de décrire naturellement la navigation entre les vues, puisqu'un tel graphe utilise des liens orientés pour passer d'une vue à l'autre, les nœuds du graphe étant associés aux différentes vues.

Selon un septième mode de mise en œuvre particulier de l'invention, qui pourra être mis en œuvre alternativement ou cumulativement avec les précédents, un procédé tel que décrit ci-dessus est en outre caractérisé en ce qu'il comporte :
- une étape de collecte des données d'usage ;
- une étape de transmission au serveur des données d'usage.

Avantageusement selon ce mode de réalisation, les données d'usage (temps passé sur une page, services requis, navigation d'une page à l'autre, etc.) sont collectées et transmises au serveur qui peut ainsi remettre à jour ses statistiques d'usage pour le terminal sur lequel s'exécute le procédé ou plus généralement pour un ensemble de terminaux.

Selon un autre aspect fonctionnel, l'invention concerne également un procédé de gestion d'une structure de données relative aux vues d'une l'application, tel que décrit par la revendication 10.

Avantageusement, la réception des données d'usage permet au procédé selon cet aspect de l'invention une remise à jour de la structure de données (graphe, table, etc.) qui permet de personnaliser le comportement de l'application. En fonction des donnés d'usage collectées sur un ou plusieurs terminaux, l'invention permet avantageusement de changer les liens applicatifs (donc les possibilités de naviguer d'une vue à l'autre), les attributs associés aux vues (donc les modes de requêtes vers le serveur en fonction de la vue et/ou du service concerné).

Selon un aspect matériel , l'invention concerne également un terminal de communication hébergeant une application cliente communicant avec une application serveur sur un serveur via un réseau de télécommunications, ladite application cliente comportant au moins deux vues, au moins une vue étant configurée pour établir au moins une requête vers l'application serveur, l'application cliente étant associée à une structure de données relative aux vues de l'application, dans laquelle au moins un attribut de paramétrage de la requête est associé à une vue et le terminal comporte les modules suivants :
- un module de sélection d'une vue, dite vue courante ;
- un module d'obtention d'un attribut associé à la vue courante dans la structure de données relative aux vues de l'application ;
- un module de génération d'une requête vers l'application serveur, ladite requête étant paramétrée en fonction de l'attribut obtenu.

Selon un autre aspect matériel, l'invention concerne également un dispositif de gestion d'une structure de données relative aux vues d'une l'application, ladite structure comportant au moins deux vues, caractérisé en ce que le dispositif de gestion comporte les modules suivants :
- un module d'obtention d'une structure de donnée relative aux vues de l'application, au moins une vue comportant dans la structure de données au moins les données suivantes associées à la vue :
   - un service ;
   - un attribut de paramétrage d'une requête vers ledit service ;
   - un lien de navigation pour naviguer vers une autre vue.
- un module de réception des données d'usage associées à la vue;
- un module de mise à jour, en fonction des données d'usage reçues, d'au moins une donnée associée à la vue dans la structure de données.
- un module de communication de la structure de donnée mise à jour.

Selon encore un autre aspect matériel, l'invention concerne également un système de gestion d'une application client-serveur, le système comprenant :
- au moins un terminal tel que décrit précédemment ;
- un serveur comportant un dispositif de gestion tel que décrit précédemment, configuré pour collecter les données d'usage en provenance d'au moins un terminal.

Selon un autre aspect matériel, l'invention concerne également un programme d'ordinateur apte à être mis en œuvre dans un terminal tel que défini précédemment, le programme comprenant des instructions de code qui, lorsque le programme est exécuté par un processeur, réalise les étapes du procédé d'exécution.

Selon un autre aspect matériel, l'invention concerne également un programme d'ordinateur apte à être mis en œuvre dans un dispositif de gestion tel que défini précédemment, le programme comprenant des instructions de code qui, lorsque le programme est exécuté par un processeur, réalise les étapes du procédé de gestion.

Les objets selon les aspects matériels de l'invention procurent au moins les mêmes avantages que ceux procurés par les procédés.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon encore un autre aspect matériel, l'invention a trait à un support d'enregistrement lisible par un processeur de données sur lequel est enregistré un programme comprenant des instructions de code de programme pour l'exécution des étapes des procédés définis ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés.

### Les figures:

La figure 1 représente un système client/serveur selon l'état de l'art.
La figure 2 illustre une architecture d'un système client-serveur selon l'état de l'art.
La figure 3 illustre l'architecture d'un système client-serveur selon un mode de réalisation de l'invention.
La figure 4 illustre un graphe selon un mode de réalisation de l'invention.
La figure 5 représente un organigramme illustrant les différentes étapes d'un procédé selon un mode de réalisation de l'invention.

### Description détaillée d'un exemple de réalisation illustrant l'invention

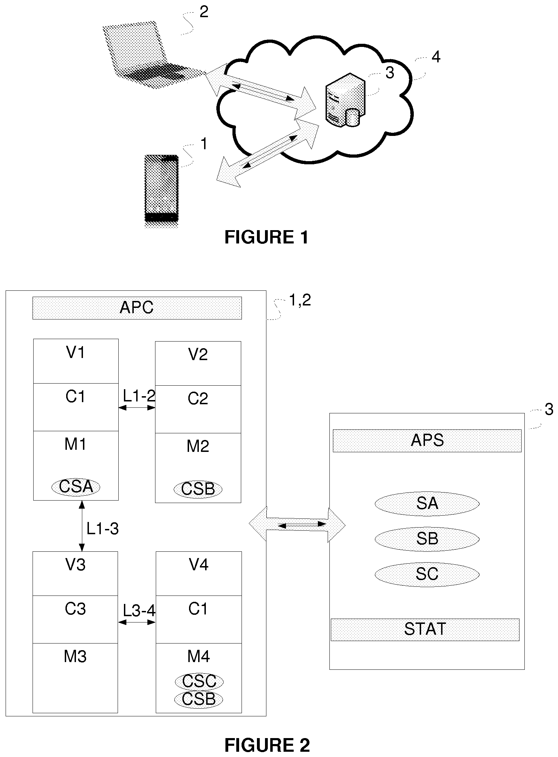

La figure 1 représente un système client/serveur selon l'état de l'art. On notera cependant que l'invention s'applique plus largement à des applications réparties, c'est-à-dire dont les données peuvent provenir de plusieurs serveurs.

Un tel système comporte au moins un serveur d'applications (3) dont le rôle est de fournir un certain nombre de services (par exemple bancaires) à des utilisateurs de terminaux clients.

Deux clients (1,2) sont selon cet exemple un *smartphone* (1) et un ordinateur personnel (PC) portable (2) aptes à dialoguer avec le serveur (3) pour obtenir des données relatives à l'application. A cet effet, une application, dite application cliente, a été installée sur le terminal client. Aucune limitation n'est attachée au type de terminal, ni au type d'application. Il peut s'agir, selon cet exemple, d'une application *Android* sur le client smartphone, et d'une application *Windows* sur le PC, les deux applications offrant les mêmes fonctionnalités, par exemple bancaires, selon des déclinaisons (affichage, navigation, etc.) qui peuvent être différentes. On notera que deux versions identiques d'une application s'adressant à deux systèmes d'exploitation différents (par exemple *IOS* et *Android* pour un *smartphone*) peuvent avoir des besoins différents, les clients des deux types de terminaux associés n'adoptant pas nécessairement le même type de navigation dans une même application. L'invention s'applique sans perte de généralités à un tel cas.

Dans un tel système, l'application cliente demande une ressource au serveur sous forme de requête (R) via un réseau de télécommunications (4), et le serveur lui fournit la ressource dans une réponse. Le client est équipé d'une interface utilisateur, ou IHM (Interface Homme Machine), chargée de la présentation des données relatives à la ressource et de l'interaction avec l'utilisateur. Selon cet exemple, le client est un navigateur Web et communique avec le serveur d'application via le protocole HTTP (HyperText Transfer Protocol) ou HTTPS sur un réseau de type Internet (4). Le serveur, également de type Web, transmet des pages Web demandées par le client. Tout autre type de réseau, protocole, logiciel client et/ou serveur pourrait être envisagé sans sortir du cadre de l'invention.

Classiquement, l'échange débute par une connexion de l'application cliente à l'application serveur, suivie d'une requête de ressource (en l'occurrence, une page Web) initiale. Le serveur Web répond en renvoyant au client ladite page initiale, par exemple la page de bienvenue correspondant à l'application bancaire. Le navigateur Web du client affiche la page sur le terminal client. L'utilisateur peut alors interagir avec l'application en navigant d'une page à l'autre et en saisissant des données (numéro de compte, mot de passe, etc.) qui sont transmises au serveur via le réseau de télécommunications.

Comme mentionné auparavant, les requêtes peuvent être émises vers le serveur selon différents modes : de façon anticipée, c'est-à-dire avant l'affichage des données, « juste-à-temps », c'est-à-dire à l'instant qui précède leur demande d'affichage, ou selon une autre règle qui peut être par exemple « au plus tard une page avant la page demandée », avec le cas échéant l'affichage d'un message demandant à l'utilisateur de patienter pendant la durée d'obtention de la réponse, etc. Dans la suite, le choix de ce mode est appelé « politique » de la requête et attaché à un attribut dit « attribut de politique ». Il conditionne donc l'instant d'émission de la requête par rapport à l'instant de navigation sur la vue, ainsi que l'instant de réception des données. Cet attribut peut être influencé par plusieurs facteurs, notamment l'importance des données attachées à la ressource, mais aussi le parcours de navigation de l'utilisateur, appelé « parcours client », ou encore le dimensionnement du serveur. Selon l'état de la technique connue, des données d'usage, notamment des compteurs de visites sur chaque partie de l'application, sont collectées par le serveur. Leur analyse, partiellement ou totalement automatisée, permet de dégager des tendances statistiques concernant l'application, qui peuvent être utilisées par les développeurs pour mettre au point les différents modes de requêtes au sein de l'application. Par exemple, une page rarement visitée peut charger ses données au dernier moment (en mode « juste à temps ») et soulager ainsi les autres traitements plus fréquents, plus importants, etc. Or, ces statistiques peuvent changer au cours de la vie de l'application : les parcours des clients au sein de l'application sont modifiés, une partie de l'application peut gagner ou perdre en importance relative, etc.

Il en résulte d'importants coûts de maintenance applicative car une modification des modes de requêtes implique une mise à jour de l'application par les développeurs, puis un rechargement ou une mise à jour de l'application par l'utilisateur, etc.

La figure 2 illustre une architecture d'un système client-serveur selon l'état de l'art.

Un tel modèle, de type MVC (Modèle-Vue-Contrôleur ou Model-View-Controller Design Pattern en anglais), est donné à titre d'exemple et pourrait être remplacé sans perte de généralité par tout autre modèle adéquat connu de l'homme du métier. Ce modèle (MVC), bien connu de l'homme du métier, est destiné à répondre aux besoins des applications interactives en séparant les problèmes liés aux différents composants logiciels. L'idée sous-jacente d'une telle architecture est notamment de bien séparer les données, la présentation et les traitements :
- Le modèle (M) correspond aux données de l'application.
- La Vue (V) est une interface utilisateur qui présente les données du modèle et transmet les actions de l'utilisateur au contrôleur.
- Le Contrôleur (C) met à jour la vue ou le modèle en fonction des requêtes de l'utilisateur et les synchronise.

Ainsi le client Web représenté sur la figure 2 comprend-il une application APC (Application Cliente) comportant quatre vues V1 à V4, chacune des vues étant associée à un modèle M1 à M4 sous contrôle des contrôleurs C1 à C4. Ces composantes ont été par exemple téléchargées avec l'application (APC) sur le terminal client (1,2). Dans le contexte de l'exemple, chacune des vues peut être traditionnellement assimilée à une page Web. Chaque vue permet l'accès à un ou plusieurs services notés CS (Client Service) correspondant à des services notés SA, SB et SC sur le serveur (3). Selon notre exemple :
- La vue 1 correspond à la page d'accueil de l'application bancaire ; elle comporte un module applicatif « CSA » de l'application cliente qui est apte à établir des requêtes vers le service correspondant SA de l'application serveur ; dans la suite, on appelle ce module une « dépendance » de l'application.
- La vue 2 correspond à la page des virements ; elle comporte un module « CSB » ;
- La vue 3 correspond à une page de paramétrage pour l'affichage de la date et l'heure, elle ne nécessite pas d'informations de la part du serveur et ne comporte donc pas de dépendance ;
- La vue 4 porte sur les consultations des comptes (elle permet notamment selon cet exemple la consultation du virement du salaire, et est donc fréquemment sollicitée en fin de mois) et comporte deux modules « CSC » et « CSB »).

Un service (SA-SC) peut être une ressource sur le serveur, accessible selon une requête particulière. Par exemple, dans le contexte d'une architecture REST (un standard de fait proposant une représentation du transfert des données à l'aide de « verbes » conventionnels banalisés de la norme HTTP, décrit dans la thèse de Fielding (de référence : « Roy Thomas Fielding. 2000. Dissertation ... CHAPTER 5: Representational State Transfer (REST)»), un service peut correspondre à un type de requête HTTP (appelé aussi « verbe ») comme une requête « GET » (qui permet de récupérer le contenu d'une ressource identifiée par une adresse de type URL) ou une requête POST (qui permet d'envoyer des données à une URL afin de créer une nouvelle ressource). Par « ressource » on entend ici un ensemble de données, indépendamment de sa présentation. Selon notre exemple, la ressource peut être par exemple la liste des dernières opérations effectuées sur le compte courant de l'utilisateur, qui pourra être affichée sous forme de page Web sur le terminal client de l'utilisateur.

Il est possible de passer d'une vue à l'autre, en navigant notamment de page en page via l'interface graphique de l'application. Ces transitions sont symbolisées par les liens Li-j où i représente la vue d'origine et j la vue d'arrivée lors d'un passage de la vue i à la vue j.

L'ensemble des composantes MVC est contrôlé par l'application APC dialoguant avec l'application APS du serveur, qui offre les services SA, SB et SC.

Dans ce type de modèle selon l'état de l'art, une application côté serveur, notée STAT, est chargée de collecter les différentes données d'usage relatives aux vues de l'application sur les différents clients et d'élaborer des statistiques concernant l'application (nombre des visites sur chaque vue, liaisons utilisées entre les vues, etc.). Leur analyse peut être par la suite partiellement ou totalement automatisée. Elle permet aux concepteurs et développeurs de l'application de la faire évoluer. Cette évolution est cependant coûteuse puisque chaque nouveau développement implique généralement une nouvelle livraison sur un serveur d'applications (par exemple un serveur d'applications Android, ou Apple, etc.) et une mise à jour de l'application sur chacun des terminaux clients.

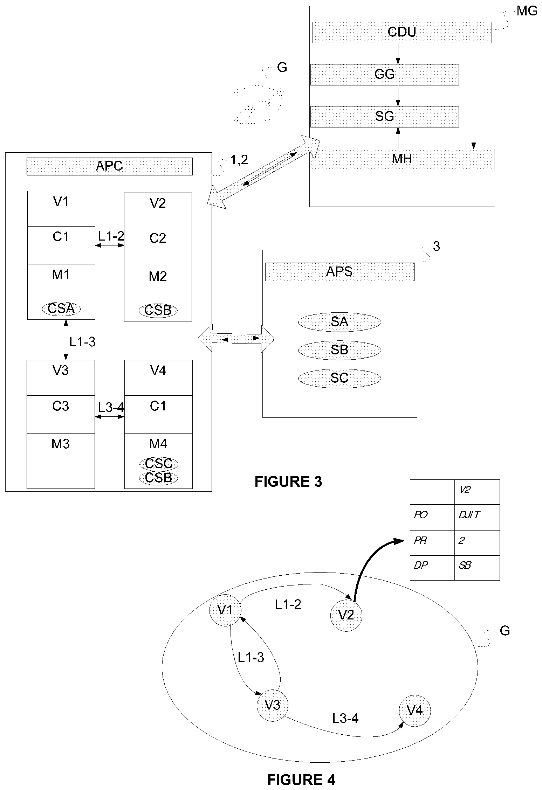

La figure 3 illustre l'architecture d'un système client-serveur selon un mode de réalisation de l'invention. Il repose sur l'utilisation d'un nouveau module/dispositif noté MG (pour Manager de Graphes) qui permet de collecter les données relatives aux vues et de les organiser sous forme de graphe. Ce module se trouve de préférence sur le serveur, mais il peut alternativement se trouver à n'importe quel endroit dans le réseau, de manière centralisée ou répartie.

On rappelle que l'avantage principal de l'invention est de réduire le coût de maintenance des applications puisque les statistiques obtenues et éventuellement mises à jour par la collecte des données d'usage sont utilisées automatiquement par le système pour modifier les attributs des requêtes au serveur, sans pour autant nécessiter un redéveloppement de l'application.

Les différents sous-modules du module MG sont intitulés :
CDU : Collecte des Données d'Usage. Ce module est relié aux différentes vues et reçoit les données qui y sont afférentes (par exemple, à chaque fois qu'un utilisateur navigue sur la vue 2, un compteur de vue V2 est incrémenté ; à chaque fois qu'un utilisateur sélectionne un service (SB) sur la vue, un compteur de service/vue est incrémenté, etc.)
GG : Générateur de Graphe. C'est le module en charge de générer dynamiquement le graphe, en fonction d'un état précédent et des données collectées par le module CDU.
SG : Serveur de Graphe. C'est le module en charge des échanges de graphes entre le module MG et l'application cliente (APC).
MH : Moteur Heuristique. C'est un module qui permet, au moyen de connaissances et techniques statistiques à portée de l'homme du métier, de remettre à jour automatiquement et/ou manuellement le graphe de l'application.

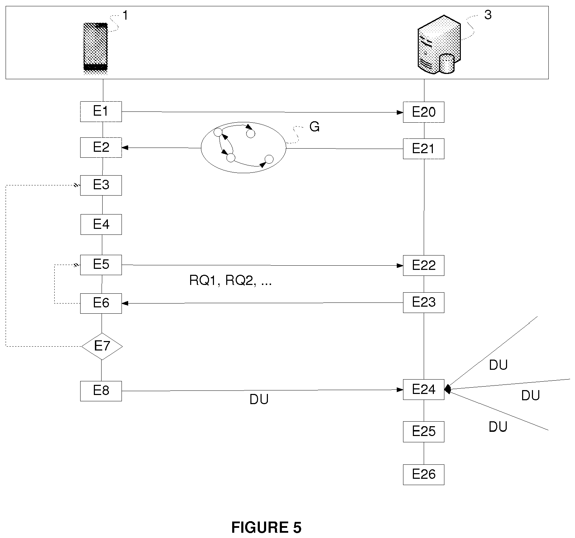

Le fonctionnement de ces différents modules sera détaillé dans la suite à l'appui de la figure 5.

La figure 4 illustre un graphe (G) selon un mode de réalisation de l'invention.

Tout autre type de représentation des données relatives aux vues de l'application peut être envisagé.

L'ensemble des navigations réalisables par l'utilisateur d'une vue applicative (V1-V4) à l'autre constitue le graphe (G) de l'application. Les nœuds de G sont les vues proprement dites, et un lien noté L1-2 d'une vue « V1 » à une vue « V2 » traduit la possibilité de naviguer depuis V1 vers V2. On considère ici un graphe orienté, c'est-à-dire que les liens peuvent être unidirectionnels (on peut naviguer d'une vue source à une vue cible de manière non réversible) ou bidirectionnels, c'est-à-dire que l'on peut dans ce dernier cas naviguer dans les deux sens. En pratique, dans le contexte d'une application mobile, les liens sont souvent bidirectionnels.

Une vue donnée peut avoir pour dépendance un ou plusieurs services (SA-SC) du serveur distant. Chaque nœud du graphe comporte donc un certain nombre de dépendances (D) associées, une dépendance étant un module (CSA-CSC) apte à dialoguer avec le module correspondant du serveur. Il se peut aussi qu'une vue ne possède pas de dépendance.

Par ailleurs une vue du graphe comporte un certain nombre d'attributs. Dans ce mode de réalisation de l'invention, chaque vue du graphe (G) est porteuse d'au minimum deux attributs :

### a) Politiques applicables (PO)

Comme introduit précédemment, l'attribut de « politique » (PO) est un attribut qualifiant la politique de résolution des dépendances au service (dénommé « Politique » ci-après), c'est-à-dire le mode de requête vers le serveur lorsque ce service est appelé. Quelques exemples possibles de valeurs pour cet attribut sont listées ci-dessous :
*getDataAsEarlyAsPossible* (DAEP) : les services dont dépend la vue sont résolus dès que possible et le cas échéant mis en cache (par exemple parce que la réponse du serveur est longue et que la vue est fréquemment consultée) ;
*getDataAsEarlyAsPossibleWithPriorityThreshold* (DAEPWP): les services dont dépend la vue sont résolus dès que possible et le cas échéant mis en cache si la vue a une priorité supérieure à un certain seuil (*Threshold* en anglais) ;
*getDataInParentView* (DIPV) : les services dont dépend la vue sont invoqués lors de la navigation dans toute vue « parente » dans le Graphe de l'application (i.e. toute vue i permettant la navigation vers la vue j concernée via un lien Li-j) ;
*getDataInParentViewWithPriorityThreshold* (DIPVWPT) : les services dont dépend la vue sont invoqués lors de la navigation dans toute vue parente si la vue a de surcroît une priorité supérieure à un certain seuil ;
*getDataJustInTime* (DJIT) : les services dont dépend la vue sont invoqués seulement au chargement de la vue (par exemple parce que la vue est rarement consultée et/ou que les services répondent rapidement et/ou que l'utilisateur peut tolérer d'attendre la réponse).

On notera que ces politiques peuvent se combiner avec des critères de péremption des données retournées par les services du serveur.

On notera aussi que la liste ci-dessus est donnée à titre indicatif et pourrait être complétée par toute politique destinée à modifier le mode de requête vers le serveur.

### b) Priorités (PR)

Un second attribut selon cet exemple, dénommé « PRiorité » (PR), qualifie l'importance relative de la vue par rapport aux autres vues. Afin de gérer cet attribut, un procédé de l'application permet de comparer les niveaux de priorité respectifs des différentes vues. La priorité de chaque vue peut être par exemple une valeur algébrique (normalisée ou non), un booléen, un vecteur à plusieurs composantes, etc.

La table T1 présentée en annexe propose une représentation permettant, en complément ou en remplacement du graphe (dans ce second cas, il faut lui ajouter les liens), de présenter les attributs et dépendances de l'application ; selon un mode de réalisation de l'invention, schématisé à la figure 4, cette table est stockée en mémoire accessible par l'application cliente, en complément du graphe. Ainsi, sur la figure 4, le nœud correspondant à la vue 2 (V2) est associé (par un pointeur, une indirection, une liste, etc.) à la colonne de la table T1 qui permet, en cours de navigation, de retrouver les dépendances de la vue et les priorités associées. Selon cet exemple, la vue V2 est associée au service SB (quatrième ligne), elle possède un premier attribut (PO, deuxième ligne) de type *getDataJustInTime* (DJIT) et un second attribut de priorité (PR, troisième ligne) de valeur 2. On notera que les deux attributs (PO, PR) selon cet exemple sont associés à la vue elle-même.

Selon une variante présentée à la table 2 T2 présentée en annexe, les deux attributs (PO, PR) sont associés à un service de la vue (une dépendance). Ainsi la vue 4, dont dépendent les services SB et SC, a-t-elle selon cette variante deux valeurs par attribut : les attributs associés au service SB ont pour valeur DJIT (PO) et 2 (PR), alors que les attributs associés au service SC ont pour valeur DAEP (PO) et 3 (PR).

Il va de soi que si l'application cliente ne reçoit pas de graphe (parce que par exemple, le service est indisponible) ou reçoit un graphe mal formaté/incohérent, elle saura en faire abstraction et mettre en œuvre une politique de requêtes « par défaut ».

La figure 5 représente un organigramme illustrant les différentes étapes d'un procédé selon un mode de réalisation de l'invention. Dans ce mode de réalisation, le serveur transmet, au début de la session, le graphe G à l'application cliente, accompagné de la table des dépendances (T1, T2) décrite à l'appui de la figure 4. Dans la suite, on parle seulement de « graphe » pour des raisons de simplification. On rappelle que tout autre type de représentation des données relatives aux vues de l'application, décrivant un ensemble de vues liées entre elles, et auxquelles sont associés des attributs et des dépendances, permettant d'influer sur les requêtes émises à destination des applications du serveur, peut cependant être envisagé.

Ce graphe est de préférence utilisé ensuite pendant toute la durée de la session de communication entre le serveur et le client. Cependant, comme on le verra par la suite, le graphe de l'application peut être remis régulièrement à jour et un nouveau graphe pourra être proposé lors d'une session suivante.

Lors d'une étape E1, une requête est émise du client vers le serveur pour obtenir le graphe de l'application. Cette requête correspond, selon cet exemple, à l'initialisation d'une session de communication avec le serveur. La demande de graphe peut être implicite ou explicite ; on notera par ailleurs que cette étape et la suivante sont facultatives car l'application cliente peut détenir localement un graphe « par défaut », ce qui peut être intéressant par exemple en cas d'indisponibilité momentanée de la fonction correspondante du serveur.

Lors d'une étape E20 correspondante, le serveur reçoit la requête et répond par la transmission du graphe G qui est stocké par le terminal client lors d'une étape E2, en vue de son exploitation par l'application cliente.

Lors d'une étape E3, le client « navigue » sur une vue, c'est-à-dire que l'utilisateur du terminal (1) sélectionne selon notre exemple une page de l'application Web bancaire. Cette vue est appelée dans la suite « vue courante ». Il s'agit par exemple de la vue V1 de la figure 3.

Lors du chargement de la vue courante, l'application cliente évalue lors de l'étape E4, grâce au graphe :
- d'une part, la politique attachée à cette vue (typiquement s'il s'agit d'une politique *getDataJustInTime,* elle n'a pas pu, par nature, être traitée en amont) ;
- d'autre part, toutes les politiques d'autres vues du graphe, remplissant certains critères ; par exemple, s'il existe au moins une vue du graphe appliquant la politique *getDataAsEarlyAsPossible* ou si une vue «fille» de la vue courante applique la politique *getDataInParentView,* il est nécessaire de préparer les requêtes à l'avance pour lesdites vues, avant même que l'utilisateur ne navigue dessus.

Lors d'une étape E5 les services correspondants sont requis, de façon asynchrone. Les requêtes correspondantes sont notées RQ1, RQ2, etc. Chaque requête correspond à un service d'une vue, ou plus généralement à une vue. On notera qu'il s'agit ici de requérir non seulement des services dépendants de la vue courante, mais encore de tous les services dépendants de vues partie du graphe pour lesquelles la requête doit être émise avant navigation effective sur cette page.

Lors d'une étape E22 correspondante, le serveur exécute les requêtes correspondant aux services requis et répond aux requêtes de l'application cliente au cours de l'étape E23.

On notera que certains mécanismes bien connus de l'homme du métier ne sont pas décrits ici, par exemple dans le cas où l'utilisateur navigue rapidement d'une vue à l'autre, il est connu de mettre en œuvre certains mécanismes de protection pour éviter des requêtes dites « en rafale » d'un même service alors qu'une première requête pour ce service est déjà en attente de réponse

Au cours de l'étape E6 correspondante, l'application cliente reçoit les résultats de ses diverses requêtes et agit de manière adaptée : mise en cache des données, traitement, transmission des données aux vues de l'application, etc.

Les étapes E5 et E6 sont répétées jusqu'à ce que toutes les requêtes nécessaires vers les services aient été traitées.

Lors d'une étape E7 suivante, le client peut naviguer sur une autre vue. Si c'est le cas, on revient à l'étape E3, la nouvelle vue devient la vue courante et les étapes E4 à E6 sont répétées. L'application cliente enregistre lors de ces étapes les données d'usage relatives à chaque action de l'utilisateur.

Lorsque le client a fini de naviguer, l'application cliente fournit lors d'une étape E8 les données d'usage (DU) à la partie serveur. On peut par exemple mentionner, de manière non exhaustive, les événements suivants, associés aux statistiques requises :
- événement d'entrée dans chaque vue (horodatage et identifiant de vue) ;
- événement de sortie de chaque vue (horodatage et identifiant de vue) ;
- événement d'appel d'un service (horodatage et identifiant de service dans la vue) ;
- événement de réponse d'un service (horodatage et identifiant de service dans la vue).
- événement de navigation d'une vue vers une autre vue (horodatage et identifiant du lien).
- etc.

Selon un exemple d'implémentation, les statistiques d'usage comportent des triplets de données notés (Si, Ti, Vi) correspondant à une session utilisateur Si, un horodatage Ti et un identifiant de vue Vi. Le traitement de ces triplets, au fur et à mesure de leur acquisition, peut servir à constituer le graphe, de proche en proche. Par exemple, si le triplet (S1, t0, V0) est tout de suite suivi de (S1, t1, V1) (avec t1 > t0 et sans valeur intermédiaire entre t0 et t1), il est raisonnable de déduire que l'utilisateur associé à la session « S1 » a navigué de la vue V0 à la vue V1 et d'adapter les statistiques du lien L0-1 en conséquence. Cette information peut être de surcroît pondérée par des compteurs totalisant le nombre de cas rencontrés, tous utilisateurs confondus, afin de fiabiliser la pertinence du Lien L0-1 (entre la vue V0 et la vue V1).

On notera que cette étape peut être régulièrement effectuée tout au long de la session.

Lors d'une étape E24 correspondante, l'application serveur reçoit les données d'usage via son module CDU. Comme symbolisé par les flèches entrantes, elle collecte et agrège les données d'usage issues de diverses applications clientes actives à cet instant (le cas échéant, elle retransmet tout ou partie de ces données, dans leur forme initiale ou sous forme d'agrégats, à un serveur tiers).

L'étape E24 est suivie d'une étape E25. Au cours de cette étape, le graphe G est mis à jour en fonction des données reçues à l'étape précédente. Selon ce mode, le graphe est donc constitué et/ou mis à jour au fil de l'eau par le serveur grâce à la collecte et à la consolidation des statistiques de fréquentation de chaque vue.

Enfin, lors d'une étape E26 facultative, l'application serveur remet à jour les politiques du graphe de l'application au moyen d'heuristiques et de techniques statistiques connues de l'homme de métier, automatisées et/ou manuelles. Selon un exemple, les résultats sont produits sur la base d'agrégats (les données d'usage consolidées provenant de l'ensemble des applications clientes) et en respectant une fréquence suffisamment espacée (typiquement, au moins 24 heures entre deux exécutions), sur la base d'hypothèses de travail. C'est une appréciation intelligente de ces hypothèses qui permet ensuite une mise à jour judicieuse du graphe. Selon le cas, cette phase peut être en tout ou partie automatisée si les critères sont fiables et déterministes.

Selon un exemple concret, un analyste (humain ou logiciel) détecte que les parcours clients réalisant l'enchaînement Vue 1 -> Vue 2 -> Vue 3 passent très rapidement sur la vue 2 (qui est en quelque sorte « transitoire »).
∘ Selon une première hypothèse, la vue 2 n'est effectivement qu'un menu transitoire. Cette page est peut-être à supprimer dans le futur.
∘ Selon une seconde hypothèse, la vue 2 contient une information sur laquelle l'utilisateur va passer très rapidement (par exemple, une question de type « suis-je hors forfait : OUI/NON ? » ou : « quel est mon solde courant ? » amène une réponse qui est très rapidement analysée par l'utilisateur, bien qu'il s'agisse d'une information très importante.
∘ Selon une troisième hypothèse, l'information est importante mais mal mise en valeur (cachée « en bas » de la page par exemple). Ceci permet de détecter (et ultérieurement corriger) un problème d'ergonomie de l'application.
∘ Selon une quatrième hypothèse, l'information est bien visible mais non pertinente. Elle implique donc une perte de temps pour l'utilisateur, une nuisance visuelle, etc.
∘ Etc.

L'arbitrage entre ces diverses interprétations peut faire intervenir de surcroît des grandeurs complémentaires telles que la quantité d'information présente sur la vue.

On notera que cette étape E26 peut être réalisée régulièrement par l'application serveur, indépendamment des autres étapes précédentes ou suivantes. Son comportement (y compris l'utilisation de techniques et données tierces) et la fréquence de son activité sont susceptibles de varier au cours du temps.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Notamment, selon une variante, il est envisageable que le graphe puisse être rafraîchi en cours de session.

Par ailleurs, selon le mode de réalisation décrit ci-dessus, le graphe susceptible d'être délivré à un instant donné est le même pour tous les utilisateurs. Les attributs des vues changent au cours du temps mais de manière uniforme pour l'ensemble des utilisateurs. Cependant, selon une première variante de réalisation, on pourrait envisager de délivrer aux différents terminaux clients des graphes différents. Les utilisateurs sont dans ce cas regroupés par profils communs : par exemple, les utilisateurs d'un même profil ont en commun de fréquenter le plus souvent la même vue ; ou de passer un temps comparable sur telle partie du graphe ; etc. Il y a dans ce cas, à un instant donné, un type de graphe par profil utilisateur, les profils restant en nombre limité, considérablement inférieur au nombre d'utilisateurs. Selon encore une autre variante, le graphe est entièrement individualisé. Chaque application cliente est donc susceptible d'avoir à un instant donné un traitement du graphe, et donc des modes de requêtes vers le serveur, qui lui est propre. Ce mode de réalisation permet une adaptation totale de l'application cliente aux habitudes de navigation de son utilisateur. Ces trois variantes de réalisation peuvent enfin être composés selon, par exemple, des méthodes dites d'« A/B testing » (une partie des applications clientes obéit à un de ces sous-modes, l'autre partie à un autre sous-mode) ; des méthodes aléatoires ; ou toute autre méthode connue de l'homme de métier. A titre d'exemple, on pourrait imaginer que 90% des applications clientes obéissent au mode de réalisation principal et que 10% d'applications clientes obéissent à la seconde variante (« individualisée »), ceci afin de mesurer sur ces 10% d'utilisateurs d'éventuels changements de comportements dans l'expérience client.

### Annexe

**Table 1 (T1) : attributs et dépendances des vues d'une application**

| | V1 | V2 | V3 | V4 |
|---|---|---|---|---|
| PO | DAEP | DJIT | - | DJIT |
| PR | 1 | 2 | - | 2 |
| DP | SA | SB | - | SB, SC |

**Table 2 (T2): attributs et dépendances des vues d'une application - variante**

| | V1 | V2 | V3 | V4 |
|---|---|---|---|---|
| PO | DAEP | DJIT | | DJIT, DAEP |
| PR | 1 | 2 | | 2, 3 |
| DP | SA | SB | - | SB, SC |

## Revendications

1. Procédé d'exécution d'une application cliente (APC) sur un terminal client (1,2) communicant avec une application serveur (APS) sur un serveur (3) via un réseau de télécommunications (4), ladite application cliente comportant au moins deux vues (V1, V2), au moins une vue (V1) étant configurée pour établir au moins une requête vers l'application serveur,
**caractérisé en ce que** au moins un attribut de paramétrage (PO, PR) de la requête est associée à une vue et **en ce que** le procédé comporte les étapes suivantes sur l'application cliente :
- sélection (E3) d'une vue (V1-V4), dite vue courante ;
- obtention (E4) dudit attribut (PO, PR) associé à la vue courante ;
- génération (E5) d'une requête (RQ1) vers l'application serveur, ladite requête étant paramétrée en fonction de l'attribut obtenu.

2. Procédé d'exécution d'une application cliente selon la revendication 1, pour lequel une vue est liée à au moins une autre vue par un lien (L1-2) de navigation dans une structure de données (G, T) relative aux vues de l'application, **caractérisé en ce qu'**il comporte en outre les étapes suivantes :
- obtention (E4), dans la structure de données relative aux vues de l'application (G, T1,T2), d'au moins un second attribut (PO, PR) pour au moins une seconde vue (V2) distincte de la vue courante (V1) et liée à la vue courante par au moins un lien (L1-2) de navigation ;
- génération (E5) d'une requête relative à la seconde vue (RQ2) vers le serveur en fonction du second attribut obtenu.

3. Procédé d'exécution d'une application cliente selon la revendication 2, **caractérisé en ce que** la structure de données relative aux vues de l'application (G,T1,T2) est obtenue du serveur (3).

4. Procédé d'exécution d'une application cliente selon la revendication 2 ou 3, **caractérisé en ce que** la structure de données relative aux vues de l'application (G,T1, T2) est obtenue en réponse à une requête de connexion (E1) de l'application cliente (APC) à l'application serveur (APS).

5. Procédé d'exécution d'une application cliente selon l'une des revendications 2 à 4, **caractérisé en ce que** la structure de données relatives aux vues de l'application (G, T1,T2) comprend un graphe orienté (G).

6. Procédé d'exécution d'une application cliente selon l'une quelconque des revendications précédentes, **caractérisé en ce qu'**un attribut (PO, PR) de paramétrage de la requête associé à la vue est un attribut de politique (PO) de requête.

7. Procédé d'exécution d'une application cliente selon l'une quelconque des revendications précédentes, **caractérisé en ce qu'**un attribut (PO, PR) de paramétrage de la requête associé à la vue est un attribut de priorité (PR).

8. Procédé d'exécution d'une application cliente selon l'une quelconque des revendications précédentes, dans laquelle au moins un service (SA, SB) du serveur est associé à une vue, **caractérisé en ce qu'**un attribut de paramétrage de la requête est associé audit service.

9. Procédé d'exécution d'une application cliente selon l'une quelconque des revendications précédentes, **caractérisé en ce qu'**il comporte en outre :
- une étape (E8) de collecte de données d'usage (DU) ;
- une étape (E8) de transmission au serveur des données d'usage (DU).

10. Procédé de gestion d'une structure de données (G, T1, T2) relative aux vues d'une application (APC), ladite structure comportant au moins deux vues (V1, V2), **caractérisé en ce que** le procédé de gestion est exécuté au niveau d'un serveur ou dans un réseau et comporte les étapes suivantes :
- obtention d'une structure de donnée (G, T1, T2) relative aux vues de l'application, au moins une vue comportant dans la structure de données au moins les données suivantes associées à la vue :
- un service (SA, SB) ;
- un attribut de paramétrage (PO, PR) d'une requête (RQ1, RQ2) vers ledit service ;
- un lien (L1-2) de navigation pour naviguer vers une autre vue (V2).
- réception de données d'usage (DU) associées à la vue ;
- mise à jour, en fonction des données d'usage reçues, d'au moins une donnée associée à la vue (Po, PR, L1-2, SA, SB) dans la structure de données ;
- transmission de la structure de données mise à jour.

11. Terminal (1,2) hébergeant une application cliente (APC) communicant avec une application serveur (APS) sur un serveur (3) via un réseau de télécommunications (4), ladite application cliente comportant au moins deux vues (V1, V2), au moins une vue (V1) étant configurée pour établir au moins une requête vers l'application serveur, dans laquelle au moins un attribut (PO, PR) de paramétrage de la requête est associé à une vue, et le terminal comporte les modules suivants :
- un module de sélection (E3) d'une vue (V1-V4), dite vue courante ;
- un module d'obtention (E4) d'un attribut (PO, PR) associé à la vue courante ;
- un module de génération (E5) d'une requête (RQ1) vers l'application serveur, ladite requête étant paramétrée en fonction de l'attribut obtenu.

12. Dispositif de gestion d'une structure de données (G, T1, T2) relative aux vues d'une l'application (APC), ladite structure comportant au moins deux vues (V1, V2), **caractérisé en ce que** le dispositif de gestion comporte les modules suivants :
- un module d'obtention d'une structure de donnée (G, T1, T2) relative aux vues de l'application, au moins une vue comportant dans la structure de données au moins les données suivantes associées à la vue :
- un service (SA, SB) ;
- un attribut de paramétrage (PO, PR) d'une requête (RQ1, RQ2) vers ledit service ;
- un lien (L1-2) de navigation pour naviguer vers une autre vue (V2).
- un module de réception de données d'usage (CDU) associées à la vue;
- un module de mise à jour (GG), en fonction des données d'usage reçues, d'au moins une donnée associée à la vue (Po, PR, L1-2, SA, SB) dans la structure de données ;
- un module de communication (SG) de la structure de données mise à jour.

13. Système de gestion d'une application client-serveur, le système comprenant
- au moins un terminal (1,2) selon la revendication 11;
- un serveur (3) comportant un dispositif de gestion selon la revendication 12, configuré pour collecter les données d'usage en provenance d'au moins un terminal.

14. Programme d'ordinateur comportant des instructions de code pour la mise en œuvre du procédé d'exécution conforme à la revendication 1, lorsque celle-ci est exécutée par un processeur.

15. Programme d'ordinateur comportant des instructions de code pour la mise en œuvre du procédé de gestion conforme à la revendication 10, lorsque celle-ci est exécutée par un processeur.

## Patentansprüche

1. Verfahren zur Ausführung einer Client-Anwendung (APC) auf einem Client-Endgerät (1, 2), das über ein Telekommunikationsnetz (4) mit einer Server-Anwendung (APS) auf einem Server (3) kommuniziert, wobei die Client-Anwendung mindestens zwei Ansichten (V1, V2) aufweist, wobei mindestens eine Ansicht (V1) konfiguriert ist, mindestens eine Anforderung zur Server-Anwendung aufzubauen,
**dadurch gekennzeichnet, dass** mindestens ein Parametrisierungsattribut (PO, PR) der Anforderung einer Ansicht zugeordnet ist, und dass das Verfahren die folgenden Schritte auf der Client-Anwendung aufweist:
- Auswahl (E3) einer Ansicht (V1-V4), aktuelle Ansicht genannt;
- Erhalt (E4) des der aktuellen Ansicht zugeordneten Attributs (PO, PR);
- Generierung (E5) einer Anforderung (RQ1) an die Server-Anwendung, wobei die Anforderung abhängig vom erhaltenen Attribut parametrisiert wird.

2. Verfahren zur Ausführung einer Client-Anwendung nach Anspruch 1, wobei eine Ansicht mit mindestens einer anderen Ansicht durch einen Navigationslink (L1-2) in einer Datenstruktur (G, T) betreffend die Ansichten der Anwendung verbunden ist, **dadurch gekennzeichnet, dass** es außerdem die folgenden Schritte aufweist:
- Erhalt (E4), in der Datenstruktur betreffend die Ansichten der Anwendung (G, T1, T2), mindestens eines zweiten Attributs (PO, PR) für mindestens eine zweite Ansicht (V2) anders als die aktuelle Ansicht (V1) und mit der aktuellen Ansicht durch mindestens einen Navigationslink (L1-2) verbunden;
- Generierung (E5) einer Anforderung betreffend die zweiten Ansicht (RQ2) an den Server abhängig vom zweiten erhaltenen Attribut.

3. Verfahren zur Ausführung einer Client-Anwendung nach Anspruch 2, **dadurch gekennzeichnet, dass** die Datenstruktur betreffend die Ansichten der Anwendung (G, T1, T2) vom Server (3) erhalten wird.

4. Verfahren zur Ausführung einer Client-Anwendung nach Anspruch 2 oder 3, **dadurch gekennzeichnet, dass** die Datenstruktur betreffend die Ansichten der Anwendung (G, T1, T2) als Antwort auf eine Verbindungsanforderung (E1) der Client-Anwendung (APC) an die Server-Anwendung (APS) erhalten wird.

5. Verfahren zur Ausführung einer Client-Anwendung nach einem der Ansprüche 2 bis 4, **dadurch gekennzeichnet, dass** die Datenstruktur betreffend die Ansichten der Anwendung (G, T1, T2) einen gerichteten Graphen (G) enthält.

6. Verfahren zur Ausführung einer Client-Anwendung nach einem der vorhergehenden Ansprüche, **dadurch gekennzeichnet, dass** ein der Ansicht zugeordnetes Parametrisierungsattribut (PO, PR) der Anforderung ein Anforderungs-Politikattribut (PO) ist.

7. Verfahren zur Ausführung einer Client-Anwendung nach einem der vorhergehenden Ansprüche, **dadurch gekennzeichnet, dass** ein der Ansicht zugeordnetes Parametrisierungsattribut (PO, PR) der Anforderung ein Prioritätsattribut (PR) ist.

8. Verfahren zur Ausführung einer Client-Anwendung nach einem der vorhergehenden Ansprüche, bei der mindestens ein Dienst (SA, SB) des Servers einer Ansicht zugeordnet ist, **dadurch gekennzeichnet, dass** ein Parametrisierungsattribut der Anforderung dem Dienst zugeordnet ist.

9. Verfahren zur Ausführung einer Client-Anwendung nach einem der vorhergehenden Ansprüche, **dadurch gekennzeichnet, dass** es außerdem aufweist:
- einen Schritt (E8) des Sammelns von Nutzungsdaten (DU) ;
- einen Schritt (E8) der Übertragung der Nutzungsdaten (DU) an den Server.

10. Verwaltungsverfahren einer Datenstruktur (G,T1,T2) betreffend die Ansichten einer Anwendung (APC), wobei die Struktur mindestens zwei Ansichten (V1, V2) aufweist, **dadurch gekennzeichnet, dass** das Verwaltungsverfahren im Bereich eines Servers oder in einem Netzwerk ausgeführt wird und die folgenden Schritte aufweist:
- Erhalt einer Datenstruktur (G, T1, T2) betreffend die Ansichten der Anwendung, wobei mindestens eine Ansicht in der Datenstruktur mindestens die folgenden der Ansicht zugeordneten Daten aufweist:
- einen Dienst (SA, SB);
- ein Parametrisierungsattribut (PO, PR) einer Anforderung (RQ1, RQ2) an den Dienst;
- einen Navigationslink (L1-2) zum Navigieren zu einer anderen Ansicht (V2);
- Empfang von der Ansicht zugeordneten Nutzungsdaten (DU) ;
- Aktualisierung, abhängig von den empfangenen Nutzungsdaten, mindestens eines der Ansicht (Po, PR, L1-2, SA, SB) zugeordneten Datenwerts in der Datenstruktur;
- Übertragung der aktualisierten Datenstruktur.

11. Endgerät (1,2), in dem eine Client-Anwendung (APC) untergebracht ist, die über ein Telekommunikationsnetz (4) mit einer Server-Anwendung (APS) auf einem Server (3) kommuniziert, wobei die Client-Anwendung mindestens zwei Ansichten (V1, V2) aufweist, wobei mindestens eine Ansicht (V1) konfiguriert ist, mindestens eine Anforderung zur Server-Anwendung zu erstellen, wobei mindestens ein Parametrisierungsattribut (PO, PR) der Anforderung einer Ansicht zugeordnet ist, und das Endgerät die folgenden Module aufweist:
- ein Auswahlmodul (E3) einer aktuelle Ansicht genannten Ansicht (V1-V4);
- ein Erhaltsmodul (E4) eines der aktuellen Ansicht zugeordneten Attributs (PO, PR);
- ein Generierungsmodul (E5) einer Anforderung (RQ1) an die Server-Anwendung, wobei die Anforderung abhängig vom erhaltenen Attribut parametrisiert wird.

12. Verwaltungsvorrichtung einer Datenstruktur (G, T1, T2) betreffend die Ansichten einer Anwendung (APC), wobei die Struktur mindestens zwei Ansichten (V1, V2) aufweist, **dadurch gekennzeichnet, dass** die Verwaltungsvorrichtung die folgenden Module aufweist:
- ein Erhaltsmodul einer Datenstruktur (G, T1, T2) betreffend die Ansichten der Anwendung, wobei mindestens eine Ansicht in der Datenstruktur mindestens die folgenden der Ansicht zugeordneten Daten aufweist:
- einen Dienst (SA, SB);
- ein Parametrisierungsattribut (PO, PR) einer Anforderung (RQ1, RQ2) zum Dienst;
- einen Navigationslink (L1-2) zur Navigation zu einer anderen Ansicht (V2);
- ein Empfangsmodul von der Ansicht zugeordneten Nutzungsdaten (COU);
- ein Aktualisierungsmodul (GG), abhängig von den empfangenen Nutzungsdaten, mindestens eines der Ansicht (Po, PR, L1-2, SA, SB) in der Datenstruktur zugeordneten Datenwerts;
- ein Kommunikationsmodul (SG) der aktualisierten Datenstruktur.

13. Verwaltungssystem einer Client-Server-Anwendung, wobei das System enthält:
- mindestens ein Endgerät (1, 2) nach Anspruch 11;
- einen Server (3), der eine Verwaltungsvorrichtung nach Anspruch 12 aufweist, konfiguriert, um die von mindestens einem Endgerät kommenden Nutzungsdaten zu sammeln.

14. Computerprogramm, das Codeanweisungen für die Durchführung des Ausführungsverfahrens nach Anspruch 1 aufweist, wenn diese von einem Prozessor ausgeführt wird.

15. Computerprogramm, das Codeanweisungen zur Durchführung des Verwaltungsverfahrens nach Anspruch 10 aufweist, wenn diese von einem Prozessor ausgeführt wird.

## Claims

1. Method for executing a client application (APC) on a client terminal (1, 2), which communicates with a server application (APS) on a server (3) via a telecommunications network (4), said client application including at least two views (V1, V2), at least one view (V1) being configured to establish at least one request to the server application,
**characterized in that** at least one parameterization attribute (PO, PR) of the request is associated with a view, and **in that** the method includes the following steps on the client application:
- selecting (E3) a view (V1-V4), which is known as the current view;
- obtaining (E4) said attribute (PO, PR) associated with the current view;
- generating (E5) a request (RQ1) to the server application, said request being parameterized on the basis of the obtained attribute.

2. Method for executing a client application according to Claim 1, for which method a view is linked to at least one other view by a navigation link (L1-2) for navigating through a data structure (G, T) relating to the views of the application, **characterized in that** it further includes the following steps:
- obtaining (E4), in the data structure (G, T1, T2) relating to the views of the application, at least one second attribute (PO, PR) for at least one second view (V2), which is distinct from the current view (V1) and is linked to the current view by at least one navigation link (L1-2);
- generating (E5) a request, which relates to the second view (RQ2), to the server on the basis of the obtained second attribute.

3. Method for executing a client application according to Claim 2, **characterized in that** the data structure (G, T1, T2) relating to the views of the application is obtained from the server (3).

4. Method for executing a client application according to Claim 2 or 3, **characterised in that** the data structure (G, T1, T2) relating to the views of the application is obtained in response to a connection request (E1) for connecting the client application (APC) to the server application (APS).

5. Method for executing a client application according to one of Claims 2 to 4, **characterized in that** the data structure (G, T1, T2) relating to the views of the application comprises a directed graph (G).

6. Method for executing a client application according to any one of the preceding claims, **characterized in that** a parameterization attribute (PO, PR) of the request, which attribute is associated with the view, is a request policy attribute (PO).

7. Method for executing a client application according to any one of the preceding claims, **characterized in that** a parameterization attribute (PO, PR) of the request, which attribute is associated with the view, is a priority attribute (PR).

8. Method for executing a client application according to any one of the preceding claims, wherein at least one service (SA, SB) of the server is associated with a view, **characterized in that** a parameterization attribute of the request is associated with said service.

9. Method for executing a client application according to any one of the preceding claims, **characterized in that** it further includes:
- a step (E8) of collecting usage data (DU);
- a step (E8) of transmitting the usage data (DU) to the server.

10. Method for managing a data structure (G, T1, T2) relating to the views of an application (APC), said structure including at least two views (V1, V2), **characterized in that** the management method is executed at a server or in a network and includes the following steps:
- obtaining a data structure (G, T1, T2) relating to the views of the application, at least one view including, in the data structure, at least the following data that are associated with the view:
- a service (SA, SB);
- a parameterization attribute (PO, PR) of a request (RQ1, RQ2) to said service;
- a navigation link (L1-2) for navigating to another view (V2);
- receiving usage data (DU) associated with the view;
- updating, on the basis of the received usage data, at least one datum (Po, PR, L1-2, SA, SB) associated with the view in the data structure;
- transmitting the updated data structure.

11. Terminal (1, 2) hosting a client application (APC), which communicates with a server application (APS) on a server (3) via a telecommunications network (4), said client application including at least two views (V1, V2), at least one view (V1) being configured to establish at least one request to the server application, wherein at least one parameterization attribute (PO, PR) of the request is associated with a view, and the terminal includes the following modules:
- a module for selecting (E3) a view (V1-V4), which is known as the current view;
- a module for obtaining (E4) an attribute (PO, PR) associated with the current view;
- a module for generating (E5) a request (RQ1) to the server application, said request being parameterized on the basis of the obtained attribute.

12. Device for managing a data structure (G, T1, T2) relating to the views of an application (APC), said structure including at least two views (V1, V2), **characterized in that** the management device includes the following modules:
- a module for obtaining a data structure (G, T1, T2) relating to the views of the application, at least one view including, in the data structure, at least the following data that are associated with the view:
- a service (SA, SB);
- a parameterization attribute (PO, PR) of a request (RQ1, RQ2) to said service;
- a navigation link (L1-2) for navigating to another view (V2);
- a module (CDU) for receiving usage data associated with the view;
- a module (GG) for updating, on the basis of the received usage data, at least one datum (Po, PR, L1-2, SA, SB) associated with the view in the data structure;
- a module (SG) for communicating the updated data structure.

13. System for managing a client-server application, the system comprising
- at least one terminal (1, 2) according to Claim 11;
- a server (3) including a management device according to Claim 12, which is configured to collect the usage data from at least one terminal.

14. Computer program including code instructions for the implementation of the execution method according to Claim 1 when it is executed by a processor.

15. Computer program including code instructions for the implementation of the management method according to Claim 10 when it is executed by a processor.
